Europäisches Patentamt

**European Patent Office**

Office européen des brevets

(19)

(11) Publication number: **0 003 245**
**B1**

# (12) EUROPEAN PATENT SPECIFICATION

(45) Date of publication of patent specification: **12.05.82**

(21) Application number: **78200392.5**

(22) Date of filing: **27.12.78**

(51) Int. Cl.³: **B 28 B 23/02, E 04 C 5/07, C 04 B 31/30**

(54) Process for the manufacture of articles of water-hardening material.

(30) Priority: **30.12.77 NL 7714571**

(43) Date of publication of application:
**08.08.79 Bulletin 79/16**

(45) Publication of the grant of the patent:
**12.05.82 Bulletin 82/19**

(84) Designated Contracting States:
**BE CH DE FR GB IT LU NL SE**

(56) References cited:
**CH - A - 142 089**
**FR - A - 923 935**
**FR - A - 2 157 617**
**GB - A - 1 130 612**
**GB - A - 1 429 167**

(73) Proprietor: **STAMICARBON B.V.**
**Postbus 10**
**NL-6160 MC Geleen (NL)**

(72) Inventor: **Bijen, Jan Martinus Jozef Maria**
**Margrietlaan 23**
**NL-6151 AH Munstergeleen (NL)**

(74) Representative: **Philippens, Martin Hubert Johan Jacques et al,**
**OCTROOIBUREAU DSM Postbus 9**
**NL-6160 MA Geleen (NL)**

Courier Press, Leamington Spa, England.

# Process for the manufacture of articles of water-hardening material

The invention relates to a process for the manufacture of articles from a water-hardening material that has been reinforced with fibrillated organic films.

The term 'water-hardening material' denotes a material consisting of a dry or virtually dry binder and, optionally, aggregates that can be hardened or bound into a solid rigid mass by a reaction between the binder and water. The term also applies to the hardened material after setting.

Suitable binders are, for example, various types of cement, gypsum and other similar materials, such as Portland cement, aluminium cement, plaster of Paris and anhydrite.

The use of both man-made and natural reinforcing fibres in water-hardening material is well known. The fibres may be either randomly distributed throughout the material or incorporated as layers of loose fibres.

British Patent 1 130 612 describes the use of a limited amount of randomly distributed discrete fibers made from a stretched and fibrillated plastics film as reinforcing material for water-hardenable masses. The fibers of limited length cannot be incorporated in the mass in more than 2 % wt. because of processing problems.

Continuous processes are also known for the manufacture of articles from water-hardening material incorporating fibrous reinforcement, such as asbestos-cement products. Asbestos cement, however, has the great drawback that the asbestos fibres used in it constitute a serious health hazard. For this reason many attempts have been made at devising substitutes with at least the same mechanical properties. In view of the many and high demands made on such substitutes as regards both price and properties, it is not surprising to find that these attempts have failed. Consequently, there was a great need of a continuous process for reinforcing a water-hardening material, which ought to be low in price and, at the same time, of excellent properties.

It is known from British Patent 1 429 167 to reinforce cement-matrix material with a physically united pre-combination of absorbent fibers and reinforcing fibers. The reinforcing fibers can be chosen from glass, steel, carbon, boron, copper, brass, aluminum and its alloys, asbestos, and silicon compounds, non-absorbent polyamides, polyesters, polyacrylics, polyolefins and polyurethanes. The fibers can be woven to tapes and impregnated with aqueous cementitious slurry. Then the impregnated tapes can be laid up to fabricate finished articles. The woven tapes used in this process are difficult to manufacture and therefore expensive. Also no continuous process for preparing reinforced water-hardening materials is disclosed.

French Patent 923 935 describes a construction material from cement reinforced with one or more networks of continuous and parallel mineral or vegetable fibers and a continuous process for manufacturing this material. The fibrous material used is asbestos, glass, hemp or cellulose. The use of other materials than mineral or vegetable fibers in an economically attractive process in order to obtain articles with good mechanical properties is not disclosed nor suggested.

The object of the invention is to provide a continuous process for the manufacture of articles consisting of water-hardening material with reinforcing material that is both attractive economically and sufficiently flexible with respect to the content of reinforcing material and the composition of the final shaped article. A further object of the invention is to provide a process that yield products of excellent mechanical properties that are comparable or superior to those of asbestos-cement products.

The present invention is characterized in that the process comprises the following steps:

— forming continuous lengths of networks, each containing a plurality of meshes;
— simultaneously advancing said networks into contact with a water-hardening material so as to form a composite layer of said networks and the water-hardening material, and
— shaping said composite layer into the desired configuration and allowing it to set, the networks being made by stretching, fibrillating and expanding a plastics film, and at least five of such networks being advanced into contact with the water-hardening material so that the number of meshes per cubic centimetre of the finished product is at least 100.

The products obtained by the present process cannot be made in the conventional manner used in the manufacture of asbestos cement, when a suspension and fibres are mixed homogeneously in conventional rotating mixing equipment, the whole is processed into layers and hardened. Yet the present invention also effects that the layer is obtained in one operation without the need of a time-consuming and expensive building-up method. Also in the manufacture of asbestos cement, the reinforcement of asbestos fibres can be applied two-dimensionally, i.e. in separate layers, but then the layers must be built up individually to form a composite layer.

The word networks should be understood to mean the net-like structure resulting from the enlargement of the fibrillated organic film in a direction somewhat lateral to the direction of fibrillation. The term mesh will be used herein to denote the void areas within and defined by the fibres of the network.

The number of meshes in the networks of fibrillated plastics films per unit volume of the end product depends on the number of networks per unit of thickness and on the number of meshes per unit of surface per network. The number of meshes in a network per unit of surface depends of the size and the type of the meshes and to the extent in which the networks have been enlarged in size. All these factors must according to the invention be so chosen that the number of meshes in the plastics films is at least 100 per cm³ of the end product and that at least five networks are present within the product layer. Better values are obtained if the number of meshes are at least 200. It is possible to choose an even higher number, e.g. a number of over 300, or, very particularly, a number of over 500. A special result will then be that the bending behaviour of the shaped articles is very favourable. As a result, very fine multiple cracking occurs during the pseudoplastic deformation. A favourable effect is that the article can regain its former shape better and that some physical properties are retained better. Multiple cracking denotes the phenomenon that an article, when bent or stretched, shows discrete cracks less than 10 mm apart. These cracks are generally smaller than 0.3 mm.

The number of networks per cm thickness is preferably greater than 10, in particular, greater than 25. The best results are obtained if the number of networks is over 50.

The number of meshes in the fibrillated stretched plastics network, which may have been enlarged in size, is preferably at least 2 per cm², particularly at least 3 per cm². This number is determined by the enlargement of the fibrillated film and the number of initial meshes, both broadwise and lengthwise. The enlargement, which may be effected broadwise and lengthwise, must preferably be 1½ to 50 times. The meshes have a diameter or smallest dimension that is greater than 200 μm, particularly 300 μm.

The percentage by volume of networks in the final product ranges between ¼ and 20%, particularly between 2 and 15%. By preference, use will be made of values of between 3 and 10%. Of course, it is also possible to make products in which these concentrations of networks and meshes are used only in the outer layers. These layers must have a minimum thickness of 1 mm.

A network of fibrillated plastics fibres is preferably prepared by extruding a plastic material into a film with a thickness of between 1 and 1000 μm, particularly between 10 and 200 μm, cutting it up into bands, if so desired, stretching it to, e.g., about 10 times the original size, which causes the material to get into a state of imminent fibrillation, and then passing it over a roller with nails, a brush or a comb, or subjecting it to shear stresses by means of rollers or air currents. The fibrillation can also be obtained by rotation. A continuous length of such a network may be a reel of this material, but also the direct outflow from an extruder, when the extruded film is stretched and fibrillated between the extruder head and the place where it is put in contact with the water-hardening material. The term continuous length should be understood to include the use of discrete lengths of such films which are fed into the process from, for example, a reel, but which have a length many times that of the ultimate shaped article. Consequently, the network used according to the invention consists of continuous fibres. This implies that the elements making up the network, such as fibres and fibrils, extend virtually throughout the entire shaped article.

The preferred plastics film material for making the networks is a polyolefin.

If use is made of a polypropylene network, which is to be preferred most, it is advantageous that it has been obtained by extrusion of polypropylene into film that has been so stretched that the degree of stretching ranges between 6 and 20, preferably between 6 and 14, especially between 8 and 12. The stretching temperature will generally range between 20 and 160°C, but, preferably, a temperature of between 100 and 155°C will be chosen. The best results are obtained at a temperature of between 130 and 150°C. The polypropylene used must not have too high a molecular weight, i.e. the melt index (at 230°C and 2.16 kg) preferably ranges between 1 and 5 and, in particular between 2 and 4. This is important for proper and ready fibrillation and, hence, the properties of the reinforced water-hardened materials made thereof.

The plastics material used for the preparation of fibrillated films may be a polyolefin, but use may also be made of thermoplastic materials that form films and fibres, such as polymers of styrene or vinyl chloride and copolymers thereof. Use is made, in particular, of partly crystalline polymers, such as polyamides and polyesters. Special preference is given to modified or unmodified polyolefins. Examples of modified polyolefins are chlorinated polyethylene and polypropylene. However, most preference is given to propylene homopolymer, although also copolymers and block copolymers, e.g. with ethylene may be used. Mixtures of polymers may also be used.

The polymers may also be made to contain all kinds of fillers and auxiliary substances, such as carbon black, polar substances, pigments, light and heat stabilizers, and antioxidants. It is very important that the correct stabilizers are incorporated in the networks. Favourable results can be achieved with a combination of a metal deactivator and an antioxidant. These compounds are used in amounts of 0.001 to 2.5% by weight, particularly 0.01 to 1% by weight. The metal deactivators chosen are complexing agents, some examples of which are phosphoric acid, citric acid, ethylene diamine tetraacetic acid or a salt thereof, N,N'-disalicylidene ethylene diamine, lecithin, gluconic acid, hydrazine derivatives and oxanilide derivatives, particularly N,N'-bis(3,5-ditert-butyl-4-hydroxyphenyl) propionyl hydrazine. Citric acid, whether or not free of water, is to be preferred.

The antioxidant is preferably a non-phenolic compound. A choice can be made from amines, particularly aromatic and secondary amines, such as N,N'-disubstituted p-phenylene diamines, diphenyl amine derivatives, aminophenol derivatives, condensation products of aldehydes and amines or of ketones and amines. Use may furthermore be made of sulphur compounds, such as mercaptans, thioethers, disulphides, and dithiocarbamates. Zinc dimethyl dithiocarbamate can be mentioned as an example. Also phosphorus compounds, such as derivatives of phosphoric acid or dithiophosphoric acid, may be used. However, preference is given to the group of amines.

According to the present invention use can also be made of a film that has been treated, e.g., with radiation, such as UV light and corona discharge, or oxidizing acids, such as chromic acid, to obtain adhesion between the network and the water-hardened mass.

The networks used in the present invention can be obtained by stretching lengthwise and then fibrillating a plastics film in one of the usual ways, but the film may also be stretched broadwise before fibrillation. The film is stretched below the melting point of the plastics material. The plastics film that is stretched and fibrillated may be substantially flat, but also a film provided with thickened parts, ridges and the like can be used to advantage. These thickened parts may be made initially during the extrusion by suitably designing the extrusion die. Rollers can also be used to make thicker or thinner parts in the film. The latter case offers the advantage that the direction of these parts can be chosen freely. The thicker parts are connected by thinner film parts in which the fibrillation can be effected more easily. It is highly recommended so to choose the mesh pattern in fibrillation that the meshes are arranged in parallel rows that are at an angle of 20 to 80° to the length of the film and the distance between which is not greater than twice the size of a mesh lengthwise.

The stretched film may be fibrillated in a mechanical way, but also spontaneous fibrillation by crystallization is possible. In the latter case, measures must be taken to ensure that the degree of crystallization is at least 30%, e.g. cooling one of the rollers with which the film is in contact. This method of fibrillation is preferably used for films provided with ridges that are parallel to each other and at an angle of 40 to 70° to the direction of transport. The stretching may be effected lengthwise, broadwise or both. In this case excellent combinations of films can be obtained, whose ridges are at different angles to the direction of stretching and thus give higher strengths.

Networks that have been stretched in various directions, e.g. lengthwise and broadwise, may be applied together in the product. This offers the advantage that the resulting product shows a more isotropic strength. By preference, the directions of stretching are virtually normal to each other.

An alternate but not preferred method for obtaining networks to be utilized in the present process is by weaving long fibres of expanded fibrillated plastics film.

The water-hardening material with which the networks are put in contact comprises the water-hardening binder, aggregates, if any, and water. The amounts may vary within wide limits, but the ratio between the amount of water and the amount of water-hardening binder generally ranges between 0.2 and 10. The amount of aggregates, particularly sand, which is preferably so fine that the average particle size is below 1 mm, may also be varied within wide limits. The ratio between the amount of water-hardening binder and the amount of aggregates preferably ranges between 0.05 and 3.

It goes without saying that the water-hardening material may contain various aggregates and/or auxiliary substances, such as sand, gravel, chalk, powdered quartz, plastic waste, sulphur, clay, fibres, vulcanized or unvulcanized rubbers, rock wool, glass wool, hardening accelerators, pigments and processing aids. Thus it can be advantageous to add polyvinyl alcohol or polyvinyl acetate as an auxiliary substance in processing a suspension of water and binder. This auxiliary substance may later have a favourable effect on the oxygen-impermeability of the finished sheet. As a result, also the plastics networks are better protected against oxygen diffusing into the sheet. This is particularly important when polypropylene networks are used.

The water-hardening material may further contain auxiliary substances that improve or accelerate the processing into end products. Thus use may be made of so-called deflocculants or other surface-active agents, hardening accelerators or retarders, and thickeners. These auxiliary substances may also be incorporated in the film material from which they can be released in a retarded way.

All types of additives, such as flame-retarding and/or flameproofing agents may of course be incorporated in the water-hardening composition and/or plastics network. Thus antimony trioxide and chlorinated and/or brominated compounds, as a mixture or separately, may be processed into one or both components.

The products obtained by the present process cannot be made in the conventional manner used in the manufacture of asbestos-cement products, wherein a suspension of the water-hardening material and fibres are mixed to a homogeneous consistency in normal rotating mixing equipment and thereafter processed into layers and hardened. It should be readily apparent that such equipment cannot be utilized with the continuous networks of the present invention.

These difficulties are overcome by the process of the present invention by forming continuous networks from fibrillated plastics films and simultaneously advancing a plurality of such networks into contact with the water-hardening material. The fibrillated plastics films can be continuously extruded, stretched and fibrillated and directly fed into the process. Alternatively, the fibrillated films or the networks can be unwound from reels on which they have been stored and continuously advanced into the process. In the latter instance, it is preferable that multiple plies of network are placed on a reel so that they may be unwound and directly and simultaneously contacted with the water-hardening material to form the layer. Also a number of such reels can be simultaneously unwound to provide a greater number of networks.

The enlargement in size of the networks that are unwound may be done by various methods well-known in the art, such as by means of tapering chain belts. If the film has been stretched lengthwise, the networks will have to be widened to, e.g., 10 times the original width. As this widening requires slight forces only, a very simple, but effective method of widening can be used. This method consists in passing the network over curved surfaces, either bent sections or bars, so that the network is stretched broadwise. The advantage of this method is that no equipment with moving parts is required. When the film is stretched broadwise, the desired enlargement in size should be obtained by lengthening the network. This can very simply be effected by making the conveyor roller turn more rapidly than the feed roller, making the transport faster than the feed.

The networks can be secured in the desired enlarged dimensions, particularly broadwise, by means of so-called spacers to which the networks are fixed in some way. If so desired, these networks may be provided with thickened parts along the sides that serve as guides having greater thickness and, hence, stiffness. These guides may be fixed to the spacers.

The contacting of networks with the water-hardening material in order to impregnate the networks can be accomplished by various methods. These include pouring in which a suspension of the water-hardening material is formed and poured, by means of a distributor, onto the networks as they are unwound and advanced through the process. Alternatively, the various components of the water-hardening material may be applied by spraying or sprinkling. Any excess water present can be removed for example by vacuum through a porous material, and the resulting layer of networks and water-hardening material is then compacted by vibration and or compressing so that better coherence is obtained. The layer is thereupon shaped into the desired configuration for the ultimate shaped article, e.g. by cutting, sawing and/or pressing, and permitted to set. By preference, the layer is at least 1 mm thick. The thickness of the layer is generally not more than 50 mm and, particularly, not more than 20 mm.

One of the special advantages of the present invention is the fact that one or more films can be fed together with the networks and incorporated in the composite layer. If so desired, these films may be provided with meshes, but the area of these meshes must be smaller than that of the meshes of the networks. These films may be not only plastic films, but also films or sheets of paper, cardboard, and similar materials, and furthermore, spun, woven or knitted fabrics of natural or man-made materials, or may be metal foil. The meshes, if any, may be utilized to discharge excess water when the layer is processed further.

These films may serve various functions, e.g. a cover film or a decorating film on one or both of the flat sides of the finished article. This film can furthermore be used to enable the various layers to be readily split at a later stage. The film can furthermore serve as a support both during the production of the layer and later on for the finished article. For this purpose the film need not be fully closed and a small mesh area is permissible.

The film can be used to maintain the networks at the desired size by attaching them to the film by gluing, stitching, stapling, or ultrasonically. The networks can also be attached by the use of local heating and melting from highfrequency heating, irradiation, hot air, or by putting hot objects in contact with the network layers. Furthermore, the networks may be attached only to one another by these methods.

Another advantage of the present invention is that other materials such as, e.g., layers of expanded polymers or other expanded or light materials, can be incorporated in the whole. Examples are expanded polyethylene, polypropylene, polyvinyl chloride, polystyrene or polyurethane, and, furthermore, perlite, rock wool or glass wool. These layers can impart insulating properties to the products. Other advantages that can be obtained are a restriction in weight, the lower price, better protection against moisture, or impacts and blows. These layers or sheets can be supplied continuously or intermittently. It is also possible to form the layers or sheets in situ, after which the reinforced water-hardening layer is applied to it. The expanded layer or sheet may also be applied to the finished water-hardened layer.

If so desired, a light and/or expanded material may be processed as an aggregate into a previously prepared suspension of water-hardening material, water, any aggregates and additives. It is also possible to foam the suspension itself. Another possibility is to incorporate fillers as a separate layer in the whole. An example of such a composition is a layer of gypsum that is surrounded by cement layers reinforced with networks. If so desired, the gypsum layer itself may also be provided with a network reinforcement. It is also possible to apply separate cement layers of different composition, e.g. one or more cement·layers containing glass beads.

It is one of the great assets of the present invention that such variations are possible without considerable alteration of the production process. The process of the present application is so flexible that, if so required, more or fewer networks and more or less of other materials can be incorporated in the water-hardening composition.

The invention will be further elucidated by two diagrammatic figures.

Fig. 1 is a diagram of a device by means of which the process according to the present application can be carried out.

Fig. 2 is a bending curve measured on product obtained in accordance with the example.

The stretched and fibrillated film (1) is payed out from reel (2) as a continuous web, after which it is given the desired width by means of spreader (3) consisting of a curved surface in combination with a wedge-shaped chain belt (not shown). The networks may be supplied together from one reel or several reels (not shown in the figure). If so desired, a film of, e.g., another plastics material (4), which may be provided with meshes, has already been supplied from reel (5). In this case the network can be attached to the film by fixing device (7) by the supply of glue and/or attaching this fibrous network to the film by heating, e.g. by means of hot objects and/or hot air. Next, Portland cement, sand and water are fed in through conduits (6). In a variant embodiment of the present invention, a film with a small mesh area (9) is incorporated in the material from reel (10), after which one or more networks (11) can be applied to the whole from reel (8) in the way described. In these places, too, water-hardening material and water (6) are applied by spraying, pouring or sprinkling. The resulting layer can then be subjected to pressure to effect proper mechanical binding between the networks and cement layer. Finally, the layer is given its final shape in device·(12), if necessary, by compressing and cutting, and then hardened in hardening device (13). This final shape may be a sheet, but also other shapes are possible, such as tube, corrugated sheet, box or other types.

The unhardened layer obtained may also be processed into tubes or other articles by wrapping this layer around a mandrel or other mould by rotating this mould. This can be effected continuously by translating the mandrel at low speed during the rotation. Next, the continuous tube obtained may, for instance, be sawn or cut in pieces and allowed to set. It is also possible to apply several such layers around the mandrel at various angles. This will give an improved strength of the article. The water-hardening mass can be applied to the networks as a suspension by passing the networks through a bath containing the suspension. It will then be necessary that the mixture of water-hardening material, aggregate and water contains a surface-active agent in an amount of 0.01 to 5% by weight relative to the whole, particularly between 0.05 and 4% by weight. Examples of suitable surface-active substance are sulphonated ureaformaldehyde resins, cellulose derivative and sulphonated melamineformaldehyde resins. The suspension may also be sprayed onto the networks. It is furthermore possible to supply one or more components separately. Although the number of meshes must also be at least 100, particularly at least 200 per $cm^3$ in this winding method of producing articles, a network is preferably chosen whose dimensions have been enlarged comparatively little. When the network has been stretched lengthwise, the widening will be less than 100%. During the formation of the layers, excess water, if any, can be removed by means of suction devices (14). If so desired, the entire pack of layers can be supported by an endless rotating belt, e.g., of felt or another supporting, preferably porous material (not shown).

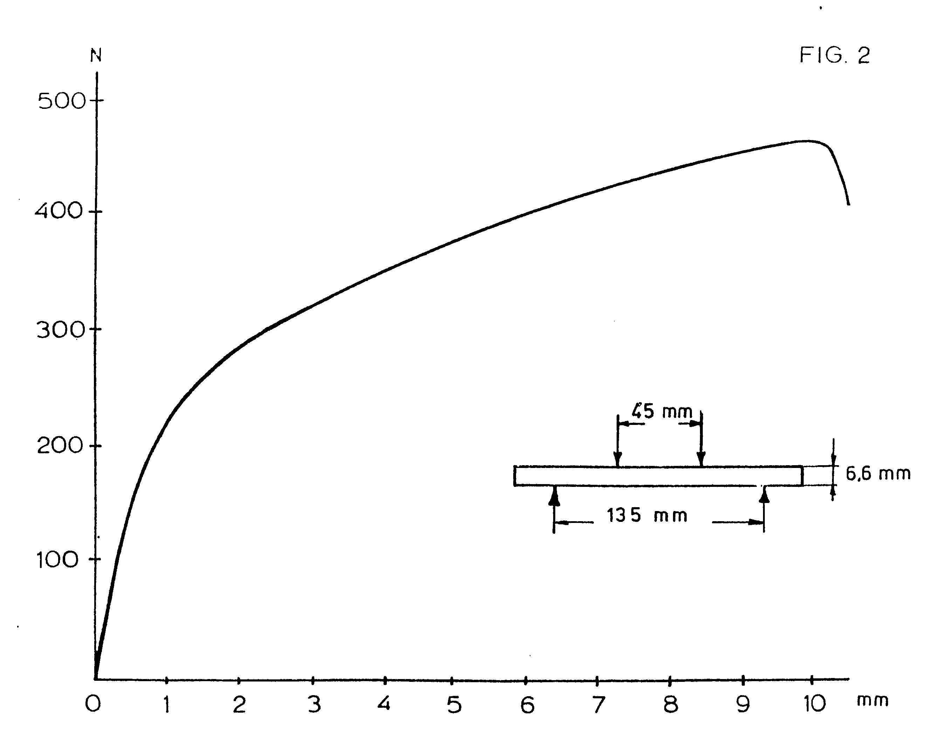

The materials obtained have properties that, at least in some respects, are much better than those of conventional asbestos cement. The product according to the invention shows a smooth bending curve, see Fig. 2 (in which the load is plotted against the deflection), which implies that very fine multiple cracking occurs. This property is of great importance in the application of the products. The advantage of the materials obtained according to the present invention is not only the improved properties, but also the many unexpected variations that are made possible by the process of the present application. The product furthermore offers the advantage that it is easy to cut and to work. It can be nailed and screwed without the risk of breaking or tearing.

The products obtained according to the present invention can be used in places in which no asbestos cement has been used so far, because of the restrictions imposed by its properties. The uses are mainly found in the building industry. Some examples of uses are sheets, tubes, corrugated sheets, pipes, panels, boxes and troughs.

Example

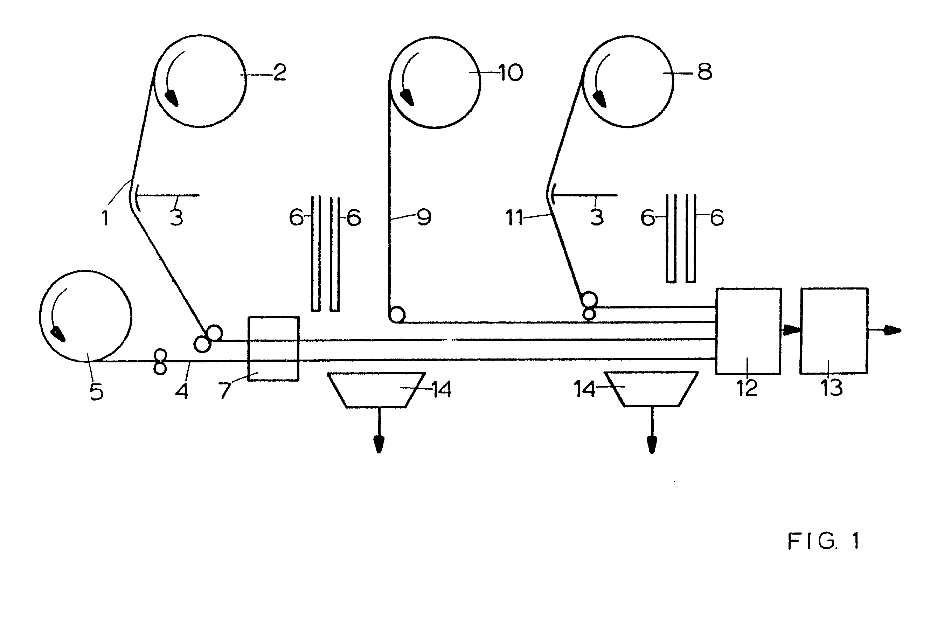

A sheet was produced in the way shown in Figure 1 and described in the specification, but use was made only of fibrillated network films. The networks were prepared by extruding polypropylene with a melt index of 2.5 (230°C, 2.16 kg) into film. This film was stretched 8× at 140°C to a thickness of 25 μm. Fibrillation was then effected mechanically by means of a roller with brushes, which produced rows of parallel crevices of 12 mm in length. A row was at an angle of 43° to the length of the film. Three films were combined and had a thickness of 75 μm. These films were wound on reels 15 at a time. To produce the reinforced cement sheet, use was made of 4 reels arranged in succession, resulting in a total of 180 networks being simultaneously advanced through the process. The films were then unwound and the width was changed from 6 cm to 100 cm. The number of meshes per cm² was 3. The film was then soaked in a suspension of Portland cement A, water and sand. The sand particles varied in size from 100 to 200 μm. The water-cement factor (WCF) was 0.75 and the amount of sand was 20% by weight relative to the cement. Subsequently, the layer was pressed to a thickness of 6.6 mm and cut. The WCF of the cut sheets amounted to 0.25. The properties of the moulded sheet, which contained 5% by volume of polypropylene on the networks and which had 810 meshes per cm³ of end product, were measured after 28 days' setting at a relative humidity of 95%.

The values of these properties were:

| | |
|---|---|
| Bending strength | 30 N/mm² (MPa) |
| E-modulus | 10 GN/mm² |
| Tensile strength | 10 N/mm² (MPa) |
| Water absorption | 7% by volume (after 28 days' setting in water of 20°C) |
| Charpy impact strength | 40 N/mm² |

Fig. 2 shows the curve obtained when the force is plotted versus the deflection in a four-point bending test. This curve is very smooth without any discontinuity, which suggests a very fine type of multiple cracking. Furthermore, the steepness of the curve in the pseudoplastic range is excellent. Thanks to the very fine type of multiple cracking, some physical properties, such as the impermeability to, i.e., water, are retained better. The article can also regain its former shape more rapidly and more fully after the load has been removed. In addition, a lower safety factor can be used in strength calculations. These properties are due in particular to the large number of meshes per cm³.

## Claims

1. Process for the manufacture of shaped articles from water-hardening materials reinforced with continuous networks from organic fibers comprising

— forming continuous lengths of networks (1, 11), each containing a plurality of meshes;
— simultaneously advancing said networks into contact with a water-hardening material so as to form a composite layer of said networks and the water-hardening material, and
— shaping said composite layer into the desired configuration and allowing it to set, characterized in that the networks (1, 11) are made by stretching, fibrillating and expanding a plastics film, at least five of such networks are advanced into contact with the water-hardening material so that the number of meshes per cubic centimetre of the finished product is at least 100.

2. Process according to claim 1, characterized in that excess water in the water-hardening material is removed from the composite layer, after which the layer is compacted and given the desired shape.

3. Process according to claim 1 or claim 2, characterized in that the number of meshes in a network (1, 11) is at least two per square centimeter.

4. Process according to any one of claims 1—3, characterized in that the number of meshes per cubic centimetre is at least 500.

5. Process according to any one of claims 1—4, characterized in that the number of meshes in a network (1, 11) is at least 3 per square centimetre.

6. Process according to any one of claims 1—5, characterized in that one or more films (4, 9) are advanced together with the networks (1, 11) and are incorporated in the composite layer.

7. Process according to claim 6, characterized in that the networks (1, 11) are attached to each other and/or the films (4, 9).

8. Process according to any one of claims 1—7, characterized in that also expanded and/or light material is incorporated in the composite layer.

9. Process according to any one of claims 1—8, characterized in that the networks (1, 11) are given the desired enlarged dimensions by passing them over a curved surface (3).

10. Process according to any one of claims 1—9, characterized in that use is made of plurality of networks (1, 11) obtained by stretching and/or fibrillating films in various directions.

11. Process according to any one of claims 1—10, characterized in that the layer is wrapped round a rotating mandrel.

12. Process according to any one of claims 1—11, characterized in that each network is made from polymeric material which contains 0.001 to 2.5% by weight of antioxidant and 0.001 to 2.5% by weight of metal deactivator.

13. Process according to any one of claims 1—12, characterized in that each network is made from polymeric material which contains 0.01 to 1% by weight of a non-phenolic antioxidant and 0.01 to 1% by weight of a complexing agent.

## Revendications

1. Procédé de fabrication d'objets façonnés, à

partir de matériaux durcissant à l'eau renforcés à l'aide de réseaux continus de pellicules organiques fibrillaires comprenant

— la réalisation de longueurs continues de réseaux (1, 11), contenant chacune un ensemble de mailles;
— la mise simultanée d'un ensemble desdits réseaux en contact avec un matériau durcissant à l'eau à former une couche composite desdits réseaux et dudit matériau durcissant à l'eau et
— la façonnage de ladite couche composite selon la configuration désirée et le durcissement de celle-ci, caractérisé en ce que les réseaux (1, 11) sont fabriqués par étirage, fibrillation et extension d'une pellicule plastique, que du moins cinq réseaux de ce type sont mis en contact avec le matériau durcissant à l'eau de sorte que le nombre de mailles par centimètre cube du produit terminé est au moins 100.

2. Procédé selon la revendication 1, caractérisé en ce que l'eau excédentaire dudit matériau durcissant à l'eau est éliminée de la couche composite avant que celle-ci est compactée et façonnée de la façon voulue.

3. Procédé selon l'une des revendications 1 à 2, caractérisé en ce que le nombre de mailles d'un réseau (1, 11) par centimètre carré est au moins 2.

4. Procédé selon l'une des revendications 1 à 3, caractérisé en ce que le nombre de mailles par centimètre cube est au moins 500.

5. Procédé selon l'une des revendications 1 à 4, caractérisé en ce que le nombre de mailles d'un réseau (1, 11) par centimètre carré est au moins 3.

6. Procédé selon l'une des revendications 1 à 5, caractérisé en ce qu'une ou plusieurs pellicules (4, 9) progressent conjointement avec les réseaux (1, 11) et sont incorporées à la couche composite.

7. Procédé selon la revendications 6, caractérisé en ce que les réseaux (1, 11) sont fixés entre eux et/ou aux pellicules (4, 9).

8. Procédé selon l'une des revendications 1 à 7, caractérisé en ce que du matériau expansé et/ou léger est incorporé à la couche composite.

9. Procédé selon l'une des revendications 1 à 8, caractérisé en ce que les réseaux (1, 11) sont élargis latéralement, en le faisant passer sur une surface courbe (3).

10. Procédé selon l'une des revendications 1 à 9, caractérisé en ce qu'on utilise un ou plusieurs réseaux (1, 11) obtenus par étirage et/ou fibrillation de pellicules en directions variées.

11. Procédé selon l'une des revendications 1 à 10, caractérisé en ce que la couche est enroulée autour d'un mandrin rotatif.

12. Procédé selon l'une des revendications 1 à 11, caractérisé en ce que chaque réseau est fabrique à partir d'un matériau polymère contenant de 0,001 à 2,5% en poids d'agent antioxydant et de 0,001 à 2,5% en poids de désactivateur de métal.

13. Procédé selon l'une des revendications 1 à 12, caractérisé en ce que chaque réseau est réalisé à partir d'un matériau polymère contenant 0,01 à 1% en poids d'un antioxydant non phénolique et 0,01 à 1% en poids d'un agent complexant.

**Patentansprüche**

1. Verfahren zum Herstellen von Formteilen aus wasserhärtenden Stoffen, die mit endlosen Netzwerken aus organischen Fasern verstärkt sind, und zwar:

— Bildung endloser Bahnen von Netzwerken (1, 11), die je eine Vielzahl von Maschen aufweisen;
— gleichzeitige Berührung der Netzwerke mit wasserhärtender Masse zur Bildung einer Verbundschicht aus den Netzwerken und der wasserhärtenden Substanz;
— Überführung der Schicht in die gewünschte Form, damit sie aushärten kann, dadurch gekennzeichnet, dass die Netzwerke (1, 11) durch Verstrecken, Fibrillieren und Erweitern einer Kunststoffolie hergestellt werden, wobei mindestens fünf solcher Netzwerke mit dem wasserhärtenden Material in Berührung gebracht werden, so dass die Maschenzahl je cm³ des Fertigprodukts mindenstens 100 beträgt.

2. Verfahren nach Anspruch 1, dadurch gekennzeichnet, dass überschüssiges Wasser der wasserhärtenden Substanz aus der Verbundschicht entfernt wird, bevor die Schicht verdichtet und geformt wird.

3. Verfahren nach Anspruch 1 oder 2, dadurch gekennzeichnet, dass die Maschenzahl in einem Netzwerk (1, 11) mindestens zwei je cm² beträgt.

4. Verfahren nach einem der Ansprüche 1—3, dadurch gekennzeichnet, dass die Maschenzahl je cm³ mindestens 500 beträgt.

5. Verfahren nach einem der Ansprüche 1—4, dadurch gekennzeichnet, dass die Maschenzahl in einem Netzwerk (1, 11) mindestens 3 je cm² beträgt.

6. Verfahren nach einem der Ansprüche 1—5, dadurch gekennzeichnet, dass eine oder mehrere Folien (4, 9) zusammen mit den Netzwerken (1, 11) in die Verbundschicht aufgenommen werden.

7. Verfahren nach Anspruch 6, dadurch gekennzeichnet, dass die Netzwerke (1, 11) miteinander und/oder mit den Folien (4, 9) verbunden werden.

8. Verfahren nach einem der Ansprüche 1—7, dadurch gekennzeichnet, dass auch gedehntes und/oder leichtes Material in die Verbundschicht aufgenommen wird.

9. Verfahren nach einem der Ansprüche 1—8, dadurch gekennzeichnet, dass die Netzwerke (1, 11) auf die gewünschte Grösse erweitert werden, indem sie über eine gebogene Oberfläche geführt werden.

10. Verfahren nach einem der Ansprüche 1—9, dadurch gekennzeichnet, dass eine Veilzahl von Netzwerken (1, 11) eingesetzt wird, die durch Verstrecken und/oder Fibrillieren von Folien in mehreren Richtungen erhalten worden sind.

11. Verfahren nach einem der Ansprüche 1—10, dadurch gekennzeichnet, dass die Schicht um einen rotierenden Dorn gewickelt wird.

12. Verfahren nach einem der Ansprüche 1—11, dadurch gekennzeichnet, dass jedes Netzwerk aus einem Polymerisat hergestellt wird, das 0,001 bis 2,5 Gew.-% eines Antioxydationsmittels und 0,001 bis 2,5 Gew.-% eines Metalldesaktivators enthält.

13. Verfahren nach einem der Ansprüche 1—12, dadurch gekennzeichnet, dass jedes Netzwerk aus einem Polymerisat hergestellet wird, das 0,01 bis 1 Gew.-% eines nichtphenolischen Antioxydationsmittels und 0,01 bis 1 Gew.-% eines Komplexbildners enthält.

FIG. 1

FIG. 2